Europäisches Patentamt

European Patent Office

Office européen des brevets

(19)

(11) **EP 1 410 717 A2**

(12) **EUROPEAN PATENT APPLICATION**
published in accordance with Art. 158(3) EPC

(43) Date of publication:
**21.04.2004 Bulletin 2004/17**

(51) Int Cl.7: **A23C 9/12**, A23C 9/13,
A23C 9/133

(21) Application number: **02756033.3**

(22) Date of filing: **22.07.2002**

(86) International application number:
**PCT/RU2002/000344**

(87) International publication number:
**WO 2003/009674 (06.02.2003 Gazette 2003/06)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.07.2001 RU 2001120270**

(71) Applicant: **Zenovich, Sergei Mikhailovich Moscow, 121170 (RU)**

(72) Inventor: **Zenovich, Sergei Mikhailovich Moscow, 121170 (RU)**

(74) Representative: **HOFFMANN - EITLE Patent- und Rechtsanwälte Arabellastrasse 4 81925 München (DE)**

(54) **METHOD FOR PRODUCING A FOOD PRODUCT, FOOD PRODUCT AND BARM FOR PRODUCING SAID PRODUCT (VARIANTS)**

(57)    The invention relates to the food industry, particularly to the dairy industry, and can be used for putting into use some new food technologies and producing a large number of new food products noted for improved properties. The invention is directed to raising the physiological activity of food products, particularly of fermented milk products and to improving other properties thereof.

In accordance with the invention, the proposed process for producing a product (variants) comprises: (1) combining a food base or at least one of its components with at least one physiologically acceptable carrier and/or with at least one its starting component, precursor; (2) combining the food base or at least one of its components with at least one microorganism or other biological system; (3) forming at least one "carrier-biocatalyst" system; (4) participation of at least part of the microorganisms and/or other biological systems of an immobilized biocatalyst in obtaining the final product due to metabolic processes, for example, due to microbial synthesis and/or transformation of the food base (substrate); (5) providing the presence of at least one formed immobilized biocatalyst in the composition of the product.

The invention discloses also products obtained in accordance with the claimed process, that are called "biocatalyzed products", as well as starters for obtaining such products.

EP 1 410 717 A2

## Description

## Field of the Art

The present invention relates to food biotechnology, including food industry, dairy industry, and can be used, particularly, in producing fermented milk products, alimentary-therapeutic, dietetic-prophylactic, dietetic products, including products based on milk, vegetables or their combinations.

Carrying the claimed technical solution into effect will lead to the origination of novel food products with pronounced physiologically active properties (in particular, children's food products, gerodietetic products), containing an immobilized biocatalyst, new starters and bacterial concentrates with improved properties, new technologies of producing food products and starters. The products produced in accordance with the present technical solution may be termed biocatalyzed (according to the process of producing thereof) or biocatalyzing (according to their physiological effect).

## State of the Art

The proposed technical solution has prototypes and analogs in various aspects. The starting point for searching the proposed solution is the desire to improve the properties of bifidokefir, the product proposed by the author of the present invention in 1991. The then entertained idea was to carry out souring of milk (food base regarded as the substrate), using conventional lactic acid cultures (for the most part microaerofils or facultative anaerobes) in the presence of the main representative of probiotics — bifidobacteria (obligate anaerobes), which remained in the final product to be consumed together with the products of their synthesis and transformation. The novelty was that for the first time the possibility was demonstrated of producing a wholesome fermented milk product, due to the metabolism of the starter microorganisms of classical fermented milk product on a conventional substrate — on the milk base, the metabolism occurring in the presence of anaerobic microflora of bifidobacteria in the range of temperatures favorable for lactic acid bacteria. In 1991—1992 a workout was given to the product, and it was applied in industry at the Lianozovsky Works producing dairy products for children (Moscow). Later on a patent was obtained for the claimed particular variant of carrying out a process for producing kefir, according to which biomass of bifidobacteria in a definite ratio with the biomass of microbial bodies of the kefir starter is introduced into technologically prepared milk cooled to 22—28°C simultaneously with the kefir starter or in the process of souring milk with kefir fungi, and milk souring is carried out till the acidity of 60—70°T is reached (Patent RU 2011352, C1. A23C 9/127, 1994). Then this approach was practiced in a number of filed patent applications (see, e.g., Patents RU 2093995 C1, 1997, RU 2104706 C1, 1998, RU 2105485 C1, 1998, RU 2130269 C1, 1999, all of C1. A23C 9/127, and others).

This process and its variants, as well as products produces according to this process, are not free from disadvantages. The main disadvantage is that irrespective of the concentration of bifidobacteria in the food product, as the globus (alimentary lump = digestive clump) and chyme pass gradually to the distal sections of the intestine, the bifidobacteria experience a number of inactivating and/or unfavorable effects, as a result of which only little of the active bifidoflora ingested with the product remains in the colon. Another frequently mentioned disadvantage is that bifidobacteria introduced into the product or into the food base are inactivated and do not provide increment of the biomass, or even lower the population at souring temperatures favorable for the starters of widespread fermented milk products. The latter objection, however, is not very essential, because an increased amount of the biomass of bifidobacteria can be introduced initially.

In order to overcome the above-indicated main disadvantage of the bifidokefir and also to make a new qualitative advance in the production of new useful food products, it is proposed, firstly (as a basic idea), to protect the probiotic microorganisms being introduced or other important biological systems from unfavorable effects as they pass in the composition of the globus and chyme along the gastrointestinal tract (GIT). For this to be done, said probiotic microorganisms or systems should be placed into some "protective envelope" in the broad sense of the word, acceptable for use in food. Hence, a proposal of immobilization. The second part of the idea is to use carriers, most favorable physiologically and valuable from various points of view, as the carrier for immobilized microorganisms and/or other biological systems (BS). To accomplish that, advances made in the food technology, chemistry, biochemistry, microbiology and medicine should be used to advantage. The biocatalyst carrier must become a component part of the final product. The third essential element of the idea is that the immobilized biocatalyst (IBC) introduced into the food base or formed therein during the technological process participates in the process of transformation of the food base into the final product. The carrier as such and/or the biocatalyst may change its properties under the effect of the transformations occurring in the substrate, i.e., the system "food substrate—immobilized biocatalyst" is a feedback system. It is also essential that, acting on the processes occurring in the substrate, it is possible to "fit-out" both the carrier and the biocatalyst by using the components available or forming in the food substrate, or specially introduced ingredients, or it is possible to vary the properties of the carrier and/or of the biocatalyst. Further it is proposed, basing on the above-stated, due to the possibilities of varying the carriers, food bases (substrates), cultures of immobilized microorganisms, introduced into the food substrate, cultures of non-immobilized microorganisms in the food substrate, other biological systems (BS), for instance, physiologically active proteins, the possibilities of these and/or other cultures and/or of BS as producers of biologically active substances, the moments and steps of introducing thereof into the food substrate, and also process techniques of making food products, to obtain a whole spectrum of variants of products and processes of producing them, which are linked by a common inventive concept. This common inventive concept consists in that due to carrying out in various forms and combinations the following operations on the food base, cells of microorganisms or BS, carriers: immobilization of various cultures of microorganisms and/or BS; participation of immobilized and/or non-immobilized microorganisms and/or BS in the process of obtaining the food product; participation of the carrier in the process of obtaining the food product; effect of the substrate and/or metabolites and/or various technological process parameters on the components of the carrier and on the process of formation of the biocatalyst present in the finished product; inclusion of a special target step into the technological process, in which step at least partially the quality characteristics of the IBC and of the finished product as a whole are formed; use of the properties of various immobilized microorganisms and/or BS and/or carriers; use of the properties of non-immobilized microorganisms and/or BS; use of the synergism of these properties which favorably manifest themselves in the process of obtaining the product and/or in the process of passing the gastrointestinal tract in the composition of the globus and chyme, it is possible to obtain new, physiologically favorable food products, new technologies of their production, new starters. Thereby unity of the invention is provided.

It is known to use immobilization of probiotics for medical purposes. For instance, there is known a process of obtaining dry biomass of lacto-, coli- or bifidobacteria. The process contemplates culturing a producer strain, accumulation of biomass with accumulation of microbial suspension, immobilization with acetylphthalylcellulose in the ratio of 1:1 for dry residue, separation of the liquid by filtering, and vacuum drying of the formed microgranules to residual humidity of 4—8 wt.%. The resulting product is a microgranulated, non-hygroscopic, stable acidoresistant preparation, containing live bacteria (Patent RU 207622 C1, C1. A61K 35/74, 10.04.97).

A disadvantage of the known process is that immobilized probiotics are intended for medical use in the form of a preparation, they are not used for introducing into the food base for transforming it from the substrate into the food product enriched with the products of the synthesis and transformation of the microorganisms.

It is known to use immobilization in the field of food industry.

Known in the art is a process for producing dietetic food product. The process contemplates treating activated food fibers, isolated by acid hydrolysis from wheat bran, with a biologically active substance: a preparation obtained from a culture of lactic acid bacteria Lactobacillus acidophilus which constitute natural biocenosis of human intestine (Patent RU 2048123 C1, C1. A23L 1/105, 1/29, 20.11.95, Bulletin No. 32).

A disadvantage of the known process is that the possibilities of the symbiotic process of producing the food product by combining various microorganisms and their enzymatic work on the food base in the presence of a carrier or of the starting components of the carrier of the biocatalyst immobilized in different technological steps, when they produce the products of the synthesis and transformation of the food substrate are not actualized in said process. This impoverishes, diminishes the range of vitamins, amino acids and other biologically active substances in the final product. Besides, said process actually contemplates only one process: immobilization of preliminarily obtained, i.e., cultivated outside the process of producing the final product, acidophilic lactobacteria and products of their metabolism, taken from the preparation obtained in the process of souring the stock material on the milk base, on the introduced food fibers of wheat bran, i.e., on the carrier from vegetable stock, the resulting dried dietary fibers being regarded as the final food product. Thus, the immobilized microorganisms did not participate in the process of transformation (souring, fermentation) of the food base of the claimed dietetic product as the substrate of the biotechnological process during the growth of the culture, and the obtained immobilized biocatalyst is not a component part of the product in which it is formed.

Known in the art is a process for producing a food additive. It contemplates blending wheat bran with water, heating the obtained substrate and cooling it to the temperature of souring, introducing microorganisms and fermentation till a prescribed pH value of the medium is reached, wherein the employed substrate comprises a mixture of carrot, cabbage, taken additionally to wheat bran in the ratio of 2:1:1, the mixture is homogenized, the heating is performed by pasteurization, and the fermentation is carried out using microorganism strain or strains taken in equal amounts from Bifidobacterium adolescentis MC-42, Propionbacterium schermanii 3-6, Lactobacillus acidophilus, Lactobacillus plantarum 31 till pH of the mixture from 4.8 to 5.1 is reached (Patent RU 2136175 C1, C1. A23L 1/105, 10.09.99, Bulletin No. 25). An analysis of this process shows that it actually comprises the step of obtaining an immobilized biocatalyst, though the authors do not indicate this. There is a substrate, there is a carrier in it, microorganisms are introduced thereinto, and there is an immobilization step (the authors call this step "fermentation"), but all these actions are not directed to obtaining the food product. A disadvantage of the process is that the obtained immobilized biocatalyst is not intended for introducing into the food base or semi-finished product for obtaining a new food product and is not a starter, and the step of obtaining the immobilized biocatalyst is not connected in any manner with obtaining a finished food product. As a result, the food product is not obtained, wherein the IBC would be formed simultaneously with obtaining the product per se, which would provide a more complete set of physiologically active properties both of the product as such and of the IBC.

The closest technical solution is the known process for producing a fermented milk product, according to which a food base, which is whole or defatted milk or cream, is technologically prepared, a starter is introduced, containing in definite proportions the cultures of Lactobacillus acidophilus, Streptococcus diacetilactis, Streptococcus cremoris, Bifidobacterium bifidum, a 80% aqueous solution of the superoxide dismutase enzyme (SOD) is introduced in a definite amount, and after souring 10—20% of a puree prepared from fruit powders is introduced. The therapeutic properties of the product are conditioned by the aggregate effect of the metabolites of the lactic acid bacteria of the SOD enzyme and of the fruit powders (Patent RU 2092065 C1, 1997, Bulletin No. 28). The known process is disadvantageous in that high stability of the microorganisms and especially of the enzymes as they pass the gastrointestinal tract in the composition of the globus is not provided in the product. This disadvantage is caused, actually, by one factor: the absence of the target step of the technological process, in which immobilization of the microorganisms and enzyme would be achieved as a target proper on the introduced carrier and carrier precursors — food fibers and pectin substances which can be isolated from the fruit powder being introduced, and in which step transformation of the carrier as such would occur. Because of the absence of this target step, there is no time for the immobilized biocatalyst to be formed in the product on the introduced carrier, for the IBC carrier to be formed from the carrier precursor, and for the most favorable complex of biologically active properties of the end product to be formed. If the fruit powder were introduced into the product in the course of its preparation and actions were taken to form an IBC on its base, then in the target step of immobilization the fruit powder itself would have produce favorable effect on the final properties of the food product, in particular, due to the manifestation of colloidal properties of the pectin properties entering into the composition of the fruit powder.

A process of producing cheese and lactic starter is known, according to which immobilized lactic acid bacteria are interacted with liquid milk under favorable temperature conditions to obtain the desired lactic starter. The resulting lactic starter is used further as the starting material for various varieties of cheese (Patent JP 02057144 A, 1990). A disadvantage of the known process and starter is that the biocatalyst carrier entering into the formulation of the starter is not intended to become a component part of the finished product, therefore the carrier having physiologically favorable properties is not selected, the biocatalyst does not remain in the composition of the final product and does not produce physiologically favorable effect on the organism.

Known in the art is a powder composition for reparation of instant yogurt food. The product comprises dehydrated yogurt powder, lactic cultures and milk proteins, soluble bifidogen fibers are additionally introduced into the product formulation (Patent FR 2750298, C1. A23C 9/123, 1996). A disadvantage of the product is that immobilization of the probiotic and lactic cultures is not performed on the fibers, and therefore their greater stability in passing the gastrointestinal tract cannot be attained.

Known in the art is a composition for restoring and maintaining gastrointestinal health, comprising an immunoglobulin and soluble dietetic fibers, as well as probiotic microorganisms and other natural protective factors. The composition components are thoroughly stirred to obtain a homogeneous mixture, agglomerated and packaged (Patent US 5744134 A, 1998). Also known is a composition comprising bacteria and fibers for maintaining gastrointestinal health. The composition comprises effective amounts of human-favorable intestinal microorganisms and food fibers. It can additionally comprise immunoglobulins and other physiologically active components (Patent US 6241983, 2001). These known products are disadvantageous in that in the process of their manufacture immobilization of the biological systems present therein — probiotic microorganisms, proteins (immunoglobulin), other natural protective factors, is not contemplated on the carrier present in the composition of the product carrier — dietetic fibers. This leads to lowering the stability of the biologically active components of the composition during their passage along the GIT and residence in the intestine after dissolution and to depletion of the complex of biologically active substances which could have formed in the immobilization step, had it been carried out.

The above survey of the state of the art suggests that each of the analogs is close in its definite features to the claimed solution, but the proposed invention generalizes, develops each of these analogs in different directions, therefore the totalities of the features of the analogs, similar to the essential features of the proposed technical solution, vary.

**Essence of the Invention**

We shall give definitions of the terms used and expand the abbreviations employed hereinbelow.

1. *Immobilized* cells are those for which artificial limitations in mobility in the environment are created; a material intermediate agent providing these limitations is regarded to be *the carrier*. On the whole, the "*cell-carrier*" system is called *immobilized biocatalyst* **(IBC)**.

2. Biological system **(BS)** — at least one element or a mixture thereof, selected from the group: an amino acid; an amino acid derivative; a peptide; a polypeptide, predominantly a physiologically active polypeptide; an enzyme; an enzyme derivative; a coenzyme; a structural component of a coenzyme; a coenzyme derivative; a vitamin; a vitamin derivative; a vitamin precursor, a protein, a protein derivative; a microorganism.

3. Microorganism **(MO)** — any microorganism strain obtained in any known way.

4. Probiotics — live microorganisms or products fermented (cultured) by them, which produce beneficial effect on human health, realized to a greater extent in the gastrointestinal tract (GIT), able to favorably act on shifts in the GIT microbiocenosis or on the process of maintaining the organism homeostasis as a whole.

5. Prebiotics — substances or dietetic additives or food components or other BS which for the most part are not absorbable in the human intestine, but favorably acting on the host organism, for example, due to selective stimulation of the growth and/or activation of the metabolism of useful representatives of its intestinal microflora.

6. Carrier precursors — components and/or substances serving as one of starting materials for forming the immobilized biocatalyst carrier.

The invention is directed to solving the problem of putting into use new technologies, processes for producing physiologically active food products, products with improved consumptive properties, to broadening the range of manufactured products featuring improved physiological effect: biocatalyzed and bioprolonged products.

The products, starters obtained in accordance with the present invention, as well as all the variants of the process for producing thereof, are interlinked in addition to the a single concept, also by a single object and by a process of accomplishing thereof:

The object is to provide new, biocatalyzed products and processes for preparing thereof, and is accomplished by that in a food product, in the course of preparing it, there is provided the presence as an ingredient or ingredients, of a physiologically favorable carrier and/or its precursors, from which during the technological process of obtaining the end product a "carrier-biocatalyst" system will be formed; or there is provided the presence of a carrier on which microorganisms or other BS would be immobilized, which would participate, at least in one of the steps of preparing the end product, due to the microbial synthesis and/or transformation of the food substrate, in preparing the end product; wherein the immobilized biocatalyst, which is finally formed in the aggregate of its properties only in the course of preparation of the product and is an integral part of the finished food product, would reach in the composition of the globus and chyme distal sections of the intestine, preserving high biological (e.g., microbial and/or enzymatic) activity and/or other physiologically important properties, for example, adsorptive properties with regard to toxins and/or adhesive properties with regard to the wall of the intestine and/or beneficial effect on the metabolism of lipids, enzymes, and/or other known properties. Said object can be accomplished with different variants of selecting the carriers, biological systems, food bases, and the technical result is attained with many different variants of carrying out the claimed process.

The technical result of the claimed technical solution is as follows:

- provision of new technologies of obtaining food products, in particular, food products on milk or milk-and-vegetable base or on combination or composition base;
- entrance to the market of new milk and fermented milk foods (biocatalyzed products), including products with improved properties of producing physiological effect on the organism, therapeutic, therapeutic-prophylactic, dietetic, particularly, gerodietetic properties, children's food products, enteral feeding products;
- improvements in the taste and/or organoleptic and/or structural characteristics of food products;
- enhancing the biological value and therapeutic-prophylactic properties of products due to broadening the range of valuable metabolites contained therein, such as amino acids, organic acids, vitamins, volatile fatty acids, bacteriocins and other biologically active components;
- speeding-up the process of souring (fermentation), intensifying the biotechnological processes with the use of IBC in the formulation of starters or as starters;
- possibility of constructing new valuable properties of food products, particularly of fermented milk products, due to the possibilities of producing combined effects on the activity of MO or BS, including their activation or inactivation or inhibition, prolonged action of MO or BS, combined use of increased bacterial or biochemical activity of immobilized MO, of the activity of immobilized BS, manifest in the technological process, and of favorable properties of the carrier as such in the living organism, and also due to other factors;
- entrance to the market of new starters for producing biocatalyzed products according to the present invention;
- increase in the shelf life of food products due to an increase in the stability and activity of MO and/or other BS due to resistance to inactivating and/or other unfavorable effects during storage, particularly to the effect of chemical reactions, e.g., of oxidation reactions occurring in the product in the course of storage, and also due to additional possibilities of introducing inhibiting and/or inactivating substances into the product;

- increase in the stability and activity of MO and/or other BS contained in the food product, which manifests itself in the human organism, due to resistance to inactivating and/or other unfavorable effects occurring during passage along the GIT, and also due to the possibility of introducing substances inhibiting and/or inactivating such effects into the product (therefore products prepared according to the present process may be called " bioprolonged action products").

**Disclosure of Claim 1**

To the totality of essential features of the claimed process (variants), which provide the attainment of the claimed technical result there belongs the presence of the following operations in the process of the invention:

(1) combining a food base or at least one of its components with at least one physiologically acceptable carrier and/or with at least one its starting component, precursor, (2) combining the food base or at least one of its components with at least one microorganism or other biological system; (3) forming at least one "carrier-biocatalyst" complex; (4) participation of at least part of the microorganisms and/or other biological systems of an immobilized biocatalyst in obtaining the final product due to metabolic processes, for example, due to microbial synthesis and/or processing of the food base (substrate); (5) providing the presence of at least one formed immobilized biocatalyst in the composition of the product.

**Time and Sequence Correlation of Carrying out Operations**

The above-indicated operations (hereafter referred to for short as "op.") can be carried sequentially or simultaneously, or in various combinations, partially or completely, coinciding or not coinciding in time. Operations (4) and (5) follow, mainly, after the conditions for their carrying out have been created, i.e., op. (4) and (5) follow operations (1), (2), (3). However, in some variants of carrying out the process all these operations may partially overlap in time or start simultaneously. In those variants of carrying out the process, when the IBC carrier will be a microorganism, op. (1) can be realized through the realization of op. (2). The biocatalyst carrier can be multicomponent, for instance, immobilization in the product can be performed on active carbon and on pectin substances (gel). The same cells and/or other BC, or different cells can be immobilized on the corresponding component. Operation (3) cannot precede op. (1) with regard to the corresponding component of the carrier and the corresponding biological system; at the same time, as regards different components of the carrier or different BS, this sequence of operations may be not observed. For the corresponding BS op. (4) is carried out after op. (2) or after op. (1), if transformation is conditioned by the metabolism of the BS of the carrier. It can also be noted that op. (5) cannot take the lead over op. (3) for the corresponding IBC. The possibility of varying the moments of the beginning, the durations of carrying out these operations, the moments of their termination provides, in particular, one of the bases for the multiplicity of different variants of carrying out the process for producing the food product.

**Disclosure of Operation (1) According to Claim 1**

The food base can be any food base comprising component(s) which can serve as a substrate for the biotechnological process. The food base can be multicomponent. The most acceptable base can be milk or a milk-and-vegetable mixture, or other base, desirably liquid or paste-like or relatively homogeneous, i.e., not containing large agglomerated complexes of the food base material, isolated from each other. However, if in any variant of carrying out the process it is necessary to choose such agglomerated base, then it is desirable in the course of the technological process to perform disintegration or homogenization of the agglomerated base for improving the conditions of carrying out the biotechnological process and/or the characteristics of the end product.

Combining the food base with at least one carrier and/or its precursor has different variants of realization. For instance, for combining with the food base it is sufficient to carry out combining with at least one component of the food base. Combining can be performed for example, by introducing the carrier into the food base. Another variant of combining is possible, when the food base or its component is introduced into a processing vessel containing at least one prepared carrier and/or component of the carrier and/or precursor of the carrier and, e.g., a microorganism culture. Irrespective of the method by which combining is performed, this operation must provide, in the final count, i.e., before the technological process is completed, contacting in one processing vessel the material of the carrier or carriers and the material or materials of the food base.

Naturally, the material of the carrier must meet the requirement of being physiologically acceptable. Since this material enters into the composition of the final food product, it must be fit for use in food. The multiplicity of variants of carrying out the process according to the invention is provided, in particular, by the possibility of using various carriers and various combinations of different carriers in the composition of one product. For example, use can be made of such carriers known in the medicine as cellulose and its modifications, in particular, microcrystalline cellulose (MCC), acetylphthalyl cellulose (APC), carboxymethyl cellulose (CMC), active (or activated) carbon, other natural or synthetic enterosorbents. Various biopolymers can also be used, for example, polysaccharides, heteropolysaccharides, in particular, alginates, pectins, high-molecular compounds. Any known carrier, meeting the indicated conditions, can be used for carrying out the process of the present invention. If in any particular variant of carrying out the process it is contemplated to use several carriers in the composition of the product, it is necessary to make sure that their combination does not deteriorate the physiological and/or consumptive properties of the product, or to take measures for preventing undesirable consequences of such combination.

The technical result according to the present process is attained with various forms of the carrier. The carrier can be in the form of a powder, granules, gel, fibers, fiber matrix, or in any other known form.

The food base or at least one of its components should not necessarily be combined with the very carrier. The combination can be carried out with a carrier precursor. The carrier is a tangible object, a component in the composition of the product. Similarly to the food base, it can be introduced into the composition of the product. However, unlike the food base, the carrier can be formed in the composition of the product, and for this purpose a carrier precursor is introduced and conditions for its formation are set up. For example, into defatted milk (component of the base) pectin substances (carrier precursor) can be introduced. When milk is fermented by lactic acid bacteria, accumulation of lactic acid takes place in the food base (substrate), this being accompanied by an increase in the acidity of the medium, this leading, under definite conditions, for instance, in the presence of sugars, of a source of calcium ions, to an intensive growth of pectin macromolecules and to gelation, i.e., to the formation of a carrier. This example shows that for some variants of carrying out the process it is not necessary to require that the food base and/or one of its components should be combined with the carrier: the technical result can be also attained upon combining the base with a precursor or component of the carrier.

### Disclosure of Operation (2) According to Claim 1

Combining the food base and/or at least one of its components with at least one microorganism and/or other biological system also has various forms of realization. It is possible, for instance, to introduce a culture of microorganisms, a starter, a bacterial concentrate or a direct-inoculation starter into the food base or into one of its components. Combining the food base with MO can be achieved, for example, by combining the food base with a carrier on which at least one MO and/or other BS is immobilized.

For combining with the food base and/or with at least one of its components, it is possible to use various microorganisms, other biological systems. The multiplicity of variants of carrying out the process of the invention is provided, in particular, by the possibility of using various MO cells, various MO strains, including those of one kind, various biological systems, by the possibility of using simultaneously their different combinations in the product. It is possible to use any technologically and/or physiologically favorable biological systems, for example, physiologically active proteins, in particular, enzymes, such as superoxide dismutase, peroxidase, enzyme derivatives, immunoglobulins, particularly lactoglobulins, e.g., breast milk secretory immunoglobulin A S-IgA, active milk-protein components, i. e., proteins which even in minimum amounts display physiological or pharmacological properties, such as lysozyme, transferrin, lactoferrin, glycopeptides. BSs participating in processes of lactic acid fermentation (heteroenzymatic and/or homoenzymatic), and/or of alcoholic fermentation and/or of butyric acid fermentation can also be used.

The technical result according to the process for producing a food product can be attained with the use of any known strains, cell cultures, employed in food biotechnology, medicine, and also with the use of various methods of their production. They can be produced, for instance, as a result of selection or as a result of screening, or as a result of genetic recombination, or by other known techniques. The technical result is also attainable with the use of any known method of obtaining a biological system employed in a particular embodiment of the process, be that an enzyme or other active protein or other biological system employed. The employed BSs can be obtained, for instance, in the process of chemical synthesis and/or as a result of a biotechnological process and/or as a result of isolating from a material of natural origin, or in any other known manner.

For attaining the technical result in various embodiments of the claimed process, it is possible to use various methods of preparing MO for combining MO with the base. Thus, it is possible to use a liquid concentrated biomass, dry rehydrated biomass of microorganisms or frozen biomass, any known methods of preparing a biomass for combining it with the food base or with its component.

### Disclosure of Operation (3) According to Claim 1

The "carrier-biocatalyst" complex can be formed in various ways. The variability of methods for carrying out this step of the process is also one of the fundamentals for providing different variants of carrying into effect the process for preparing a food product according to the invention. The process is carried into effect in those cases, when the "carrier-biocatalyst" complex is not introduced into the food base, but is formed in the course of the technological process. Numerous examples of such variants of effecting the process may be given here, but the above-presented example with pectin substances in the milk base will suffice.

Attention shall be drawn to the most important aspect of operation (3). This object of this operation is to provide the presence in the composition of the product of an immobilized biocatalyst which would participate with its biological systems in the transformation of the food base into the finished product and would also become transformed in the course of the technological process. This object according to the present invention is accomplished, in principle, in two different ways, discriminate in the way of appearance of the IBC in the product. The first way (IBC was not initially introduced into the product or into the food base, the IBC formation in the composition of the product is accomplished in the course of the technological process) is realized in claim 1. The second way consists in that the IBC is introduced into the product or into the food base, and its transformation takes place, i.e., there occurs a change of the qualitative characteristics in the product or in the food base. The second way is realized in claim 5 and in the claims dependent thereon. One and the same feature is inherent in both types of preparing biocatalyzed products: both the process of formation of the IBC and the process of changes in any of its qualitative characteristics are necessarily accompanied by a process of changes of some qualitative characteristics of the food base (or of the food product) in whose composition the IBC is present, i.e., these two processes are in the cause-and-effect relation. The technical result attainable in accordance with the claimed processes is determined, in particular, by that such interrelation exists. Just due to the existence of such cause-and-effect relation, one of the features of the claimed processes is that in the course of obtaining the product a change is made in some of the qualitative characteristics of the food base and/or of the food product, associated with the process and/or conditioned by the process of formation of the IBC or by the change of the qualitative characteristics of the IBC. Let us explain this by examples. Formation of the IBC in the fermented milk product is accompanied, e.g., in the case of colloidal carriers, by a change in the structural characteristics of the product, particularly rheological ones, for instance, in viscosity. For the consumer this is expressed by the maturity of the clot, by the density of the fermented milk product. Consequently, parallel to the process of IBC formation, there takes place transformation of the food base (associated with this process). In the given example the processing of the food base is caused by the metabolism of the biological system of the carrier of the immobilized biocatalyst, but not of the immobilized biological system. In other widespread processes for producing a biocatalyzed product according to claim 1, the processing of the food base occurs, for the most part, due to the metabolic processes in the biological system immobilized by the IBC carrier.

As a rule, IBC formation is carried out purposefully, by acting upon the food base containing a carrier (or its precursor) and the biological system subject to immobilization, initiating transformations of the "carrier-BS" system, e.g., "carrier-cell" or "carrier-enzyme". For this to be done, changes in the physicochemical properties of the system are acted upon through changes in the properties or composition of the food base containing this system: for instance, food fibers under the influence of such actions change their adhesive, adsorptive properties, their mechanical properties, particularly rigidity, plasticity, may vary. Depending on the pH of the medium, parameters of the process of hydrolysis may vary, this leading to subsequent changes in the qualitative characteristics of the carrier, various chemical reactions can take place, such as carboxylation, methoxylation, etherification, various electrophysical changes can take place, e.g., ionic equilibrium may change, physicochemical properties can vary, e.g., rheological characteristics, adsorption characteristics, the chemical and/or biochemical characteristics of the functional groups of the carrier biopolymer, etc., may vary.

**Disclosure of Operation (4) According to Claim 1**

A next important feature of the claimed technical solution, as regards the process for producing a food product, is that element of the process, which contemplates participation of the BS of the immobilized biocatalyst in the process of producing the product. In the process according to claim 1, immobilization of this BS on the carrier is carried out in the course of the technological process, in one of whose operations the carrier and/or its precursor is introduced into the product or into the food base.

The technical result according to the claimed process is attained in different variants of carrying it into effect, which differ in the pathways by which the BS gets into the product and in the process steps in which there takes place immobilization of that BS on the carrier, which participates in the process of processing of the food base. A group of variants of carrying out the present process can be characterized by that the IBC biological system which has participated in obtaining the finished product due to the metabolic process became immobilized on the carrier in the course of the technological process. It is clear to those skilled in the art, that a great many examples of such carrying the process into effect can be given. We shall indicate at least immobilization of microorganism cells into a polysaccharide gel formed in the product in the course of the technological process.

The participation of at least part of the IBC BS in obtaining the finished product due to metabolic processes, e.g., microbial synthesis and/or processing of the food substrate, can be achieved in various ways. The technical result is attained with different variants of the participation, for instance, the BS itself can transform the food substrate in the course of the BS synthesis, the BS itself may serve as a substrate for other BS(s) which transform the food substrate or supply them with the necessary metabolic products, e.g., intermediates, or produce metabolites inactivating the metabolism of other biological systems or inhibiting the course of some biochemical processes in the food base, or compete with other BSs for definite components of the substrate or participate in some other known manner in the chain of transformations of the food substrate. As indicated above, variants of carrying out the process are possible, wherein the process of transformation of the food base is conditioned, at least partially, by the metabolism of the biological system of the carrier. Certainly, such variants can be carried into effect only on condition that the carrier comprises such biological system.

The technical result according to the process for producing a food product is attained with different variants of embodying thereof, differing in the method of immobilization, for instance, immobilization can be performed by chemical and/or physical and/or other known techniques.

The technical result according to the process for producing a food product is attained with different variants of embodying thereof, differing in the method and/or topology of immobilization, for example, at least one BS can be immobilized on the surface of the carrier and/or in the bulk of the carrier and/or in a diaphragm reactor vessel and/or by other known method.

The technical result according to the process for producing a food product is attained with different variants of embodying thereof, differing in the method of binding cells and/or BS with the carrier and in the carrier of the forces of this binding. For instance, in different variants of embodying, such forces of binding BS with the carrier can be used as adsorptionally nonspecific and/or adsorpionally biospecific and/or chemical and/or other known binding forces.

The technical result according to the process for producing a food product is attained with different variants of embodying thereof, differing in the inclusion or non-inclusion of the BS into the matrix of the carrier, by the reversibility or irreversibility of the BS binding with the carrier.

The technical result according to the process for producing a food product is attained with different variants of embodying thereof, differing in the mechanisms of binding immobilized cells and/or BS with the carrier.

The technical result according to the process for producing a food product is attained in different variants of embodying thereof, differing in the character of action of the material of the carrier on the metabolism of the BS, though in the majority of the variants of embodying it is preferable to select carriers producing beneficial effect on the activity of cells. However, in some variants of embodying the process, for accomplishing biocatalyzing or bioprolonging action, inactivating and/or inhibiting action of the carrier on the metabolism of some BS can be specially used.

We should like to note also that in many variants of carrying out the process according to the invention there can coexist several IBC carriers or different BSs immobilized on one carrier and/or immobilized on different carriers. When considering the set of the above-cited IBC characteristics for each "carrier-biocatalyst" pair, in each individual pair its own set of these characteristics may be observed, differing from the set of the characteristics of another "carrier-biocatalyst" pair which coexists in the same product simultaneously with the preceding one, i.e., there can be realized simultaneously different methods of immobilization and/or different forces of BS binding with the carrier and/or different mechanisms of BS binding with the carrier and/or other known attributes characterizing the binding of the immobilized BS with the carrier.

## Disclosure of Operation (5) According to Claim 1

The presence of the obtained IBC in the composition of the product can be provided by different ways. The technical result according to the claimed process is attained in any variants of embodying, which contemplate reserving or preserving the IBC introduced into the base or formed therein in the course of the technological process. The very operation of reserving or preserving the IBC in the composition of the product in some variants of embodying the process may reduce to taking purposeful measures in the course of the technological process for ruling out conditions for degradation of the IBC formed in the product or in the food base or of the introduced IBC and/or to creating protective factors preventing such degradation, e.g., to introducing special reagents, particularly stabilizers, and/or to carrying any other action known in the biotechnology or biochemistry, which enables preserving the IBC in the composition of the finished product. The presence of the IBC in the product can be provided, e.g., by ruling out effects degrading the IBC. For instance, in the mentioned example with the IBC in the form of MO immobilized by the polysaccharide gel, turbulent stirring with a definite intensity can destroy the IBC. Therefore ruling out such stirring, prescribing mild, laminar regime of stirring the liquid product is a measure providing the presence of such IBC in the composition of the product. Variants of carrying out the process according to the invention are possible, in the realization of which the formed multicomponent immobilized biocatalyst, i.e., the entire complex (set) of various "carrier-biocatalyst" systems coexisting in the product, that differ at least by one constituent in this pair, loses one or several its components in the course of the technological process, but the entire set is not lost. Also possible are variants of carrying out the process according to the invention in the realization of which the formed multicomponent biocatalyst loses completely or partially one and/or more of its components in the course of the technological process. The process is carried out also in the case of partial (but not complete!) loss of the sole carrier present in the product.

## Disclosure of Claim 2

The technical result according to the claimed process is attained with the use of various biological systems. As the biological system use can be made of at least one element or of a mixture of elements selected from the group comprising: microorganisms, amino acids, amino acid derivatives, peptides, polypeptides, enzymes, enzyme derivatives, a coenzyme, structural components of the coenzyme, coenzyme derivatives, vitamins, vitamin derivatives a vitamin precursor, proteins.

Use can be made of various combinations of said BSs, especially in those cases when this leads to the synergism of their biologically active properties or to the synergism of the biologically active properties and technological characteristics of the obtained food products.

## Disclosure of Claim 3

The technical result according to the claimed process is attained also by that for forming the "carrier-biocatalyst" system and/or for changing some qualitative characteristics of this system in the course of the technological process for producing the finished product, corresponding conditions are provided in the food base and/or at least in one of its components, i.e., purposefully a complex of physical and/or of physicochemical, and/or of chemical and/or of biochemical parameters and/or characteristics of the technological process is formed, and/or a purposeful influence is exerted by changing the above-cited characteristics of the process and/or by introducing reagents, e.g., target additives improving the binding of the biological system with the carrier, improving the sorption properties of the carrier, or improving its adhesive properties, or improving other known technological or physiological properties, and/or in other known manner, the result of which is at least a change of at least one qualitative characteristic of the "carrier-biocatalyst" system. In the course of the technological process measures can be taken for improving the qualitative characteristics of the IBC, which manifest themselves directly in the qualitative properties of the product, such as its organoleptic properties, taste, odor, its structural characteristics, such as the clot density, absence of syneresis. Measures can be taken for improving the qualitative characteristics of the IBC, which manifest themselves in an improvement of the physiologically active properties of the food product, i.e., improve adhesion of IBC particles to the walls of the intestine and/or enhance the preservation of valuable BSs in passing the GIT and/or lower excess energy value of the product and/or increase the content of biologically active substances and/or improve the physiological value of the product in any other known manner.

## Disclosure of Claim 4

The technical result according to the process (variants) can also be attained, if the technological process of producing the finished product comprises a step in which, at least partially, an IBC is prepared in its final qualitative form or some change in its qualitative characteristics is attained. It is quite natural that for solving the problem of forming at least one IBC in the composition of the product or changing some qualitative property of at least one IBC introduced into the food base, in many variants of embodying the process a step in the technological process is provided, wherein this problem will be purposefully solved. The objective of this step of the process can be forming an IBC if it has not been introduced into the base and/or changing some of its qualitative characteristics if an IBC has been introduced into the base or into the product. Therefore this step should be called "target step". In this step of the process a complete formation of the IBC can be attained, or an incomplete, partial formation of the IBC can be attained. In the latter case the IBC formation is completed in the subsequent step(s) of the technological process. The process of changing some qualitative characteristic of the IBC (if it has been introduced into the base) can be completed in this target step or not completed in this step, but be continued and/or completed in the subsequent step(s) of the technological process. It is also necessary to note that the process of IBC formation in the product or the process of changing qualitative IBC characteristics in the product may start before the onset of this target step. Therefore, in different variants of carrying out the process according to the invention, the durations of the IBC formation processes or of the processes of changing qualitative IBC characteristics are different, these processes may take longer time than the target step does, they may start before the commencement of the target step and/or end later than the target step ends and/or may coincide therewith. The target step itself may coincide fully and/or coincide partially and/or not coincide at all with another and/or with several other steps of the technological process. The target step can be divided into several fragments (stages), it can be discontinuous, i.e., the fragments or stages of the target step may not adjoin one another in terms of their commencement and termination. Since the IBC carrier can be multicomponent, there can be several target step, i.e., in some variants of embodying the claimed process there can be more than one target step. For instance, in the first target step in the technological process there takes place formation of at least one IBC or a change of some qualitative characteristic of at least one IBC, in the second target step there takes place formation of at least one other IBC or a change of some qualitative characteristic of the other IBC, etc. Even with several target steps being present in the technological process, some of them or all of them can be multistep. In some variants of carrying out the claimed process, wherein the presence of a multicomponent IBC is provided, the target steps may coincide with each other or coincide partially, or not coincide at all.

We regard the target step as a step of product biocatalyzation, in which, at least a unity of two systems begins to be formed: of a "catalyst-biocatalyst" system and of an "IBC-food product" system. From the technological standpoint, singling out the target step enables the production engineer to provide for a complex of measures ensuring IBC formation in the product or ensuring IBC transformation along qualitatively defined lines. To such measures there belongs setting up conditions for the IBC formation process to proceed or setting up conditions for changing qualitative IBC characteristics. The process parameters: temperature, concentration, acidity, process characteristics, e.g., physical, physicochemical, chemical, biochemical characteristics, can be acted upon. Target additives can be introduced in the form of reagents required for the necessary reactions or processes to proceed, e.g., donors of ions, donors of radicals, donors of functional groups, stabilizers, buffers. The process of biosynthesis can be acted upon by using induction and/or repression mechanisms and/or other known mechanisms. Additives can be introduced by saturating with a gas or with a mixture of gases, or by other known techniques. The process can be acted upon by removing certain substance(s) from the medium, for instance, undesirable metabolites, with the help of different methods, particularly, by filtration, sorption, chemical binding, degassing, evacuation, any other methods known in the chemistry, biochemistry, biotechnology. For achieving the goal in the target step, any special equipment can be used, for instance, a starter tank provided with a special cooling system and/or with a vacuum pump and/or with a special system for preparing aseptic air, an aerostat and/or any other known equipment used in the processes of food technology.

### Disclosure of Claim 5

The technical result according to the second maim variant of the claimed process is attained by that combining the food base or its components with at least one physiologically acceptable carrier and with at least one microorganism and/or other biological system is performed by introducing at least one carrier on which all the introduced microorganisms and/or other biological systems or part thereof are preliminarily immobilized, into the food base and/or into its components comprising, predominantly, a substrate or substrates from the standpoint of subsequent biotechnological process occurring in the food base and/or in the food product. In accordance therewith, a second main way of producing a biocatalyzed food product consists in introducing into the food base and/or into one of its components a carrier on which a microorganism and/or other biological system has been immobilized beforehand, i.e., prior to introducing into the food base. Many variants of carrying out the process according to the invention will be realized just by introducing into the food base a carrier on which part of the microorganisms necessary for the technological process and/or of other BS has been immobilized.

In accordance therewith, the process of producing a food product according to the invention contemplates the use of a food base, of at least one carrier, and of at least one biological system, upon which the following actions are performed:

- at least one carrier and at least one biological system, in the form of at least one immobilized biocatalyst which is a complex "carrier-biological system", are introduced into a food base,
- after that the introduced immobilized biocatalyst is transformed, this being accomplished by changing at least one of its qualitative characteristics,
- participation of at least one immobilized biocatalyst in obtaining the finished product is provided due to metabolic processes and/or processing of the food base,
- the presence of at least one immobilized biocatalyst in the composition of the finished product is provided.

### Time and Sequence Correlation of Process Operations

The description of the time and sequence correlation of the operations according to claim 5 is similar to the description with regard to claim 1. Operation (1) cannot be carried out later than operations (2)—(4), but in some particular embodiments of the process operation (1) can be carried out along and simultaneously with other operations, with the proviso that one and the same "carrier-BS" pair is involved. Operation (2) can be realized only after operation (1), the same holds true for the realization of operation (3) in those variants of the process and only with regard to those BSs which are introduced in the form of being immobilized on the carrier and which enter into the composition of the IBC. At the same time, in the case of a multicomponent and/or different biological systems being present, such sequence may be not observed with regard to different "carrier-BS" pairs.

### Disclosure of Operation (1) According to Claim 5

The description of the requirements to the food base, carrier and BS is given in the disclosure of operations (1)—(2) according to claim 1.

### Disclosure of Operation (2) According to Claim 5

Changing of at least one qualitative characteristic of the "carrier-biocatalyst" complex, for instance, of its physical and/or chemical and/or physicochemical, and/or biochemical and/or microbiological and/or other known characteristics can be accomplished by different methods.

Since the "carrier-biocatalyst" complex is already formed, changes of only some qualitative characteristics of this complex are carried out in the technological process. It is necessary to take into account that even such simple process technique as keeping the immobilized catalyst in liquid medium under definite thermal conditions, under definite physicochemical conditions, may lead to certain transformations of the "carrier-cell" or "carrier-enzyme" complex. Many carriers, e.g., dietetic fibers, become impregnated with moisture, expand. The physicochemical properties of the carrier may change: for instance, food fibers in some cases change their adhesive, adsorption properties, their mechanical properties, particularly rigidity, plasticity, may change. Upon changes in the acidity of the medium, the conditions of the course of the process of hydrolysis may change, this leading to subsequent changes in the qualitative characteristics of the carrier; there may take place different chemical reactions, such as carboxylation, methoxylation, etherification, different electrophysical changes, e.g., ionic equilibrium may change, the physicochemical properties, e.g., rheological characteristics, absorption characteristics, may change, the chemical and/or biochemical characteristics of the functional groups of the carrier biopolymer, etc., may change. The multiplicity of the possibilities is such that its complete description is not realistic, but it is well understood by those skilled in the art.

A change in the qualitative characteristics of the IBC formed outside the process for producing the product and introduced into the food base or into the product leads to a corresponding change in the qualitative characteristics of the product in which the IBC is contained. For example, a variant of carrying out the process according to the invention, wherein into the food base comprising technologically prepared milk a starter is introduced in the form of dehydrated food fibers of wheat bran, immobilized with cultures of Lactobacillus Bulgaricus and thermophilic lactic acid streptococcus by the process of lyophilic drying, is wherein the process of preparing yogurt is accompanied by the hydration of the fibers, by acid hydrolysis, by a change in their volume, plastic properties, adsorption properties, and, correspondingly, by a change in the structural characteristics of the yogurt. For the reasons only too well-known to those skilled in the art to be further explained herein, we shall not disclose this thesis in more detail.

### Disclosure of Operations (3)—(4) According to Claim 5

The disclosure of these operations is similar to the disclosure of operations (4) and (5) according to claim 1.

### Disclosure of claims 6—8

The disclosure of these claims is similar to the disclosure of claims 2—4.

A further disclosure of the dependent claims according to the process will proceed parallel to two main pathways of the appearance of the IBC in the composition of the finished product. Therefore, for the sake of brevity, we shall not repeat ourselves in respect of equitypically dependent claims.

### Disclosure of Claim 9 and of Claim 14

The technical result according to the claimed process (variants) is attained with the use of many biological systems, particularly, of microorganisms. In particular, for obtaining biocatalyzed analogs of classical fermented dairy products, it is possible to use representatives of technical microflora of dairy production, such as lactic acid streptococci, lactobacteria, and others. In particular, it is possible to use at least one MO or a mixture thereof, selected from the group comprising MOs used as starters or in the formulation of starters of the known fermented milk products such as kefir, yogurt, ryazhenka, acidophilin, kumiss, airan clabber, sour cream, curds, and many other known products. In conformity with the idea of the author that bifidobacteria should be introduced in the technology of fermented milk products, it is proposed to use probiotic microorganisms and/or other BS having probiotic activity for preparing biocatalyzed products. To this end it is possible to use, for instance, microorganisms from the group of probiotics and/or other biological systems having probiotic activity, e.g., bifidobacteria, propionic acid bacteria, Bacillus subtilis, lactobacteria, acetic acid bacteria. We shall not continue the list of possible BS having probiotic activity, because they are well known to those skilled in the art. The Technical result i9n accordance with the claimed process in different variants of its embodiment is attainable with the use of any known BS having probiotic activity, immobilized on the IBC.

### Disclosure of Claims 10 and 15

The technical result according to the claimed process is also attained by that at least one carrier of an immobilized biocatalyst or at least one of the components, precursors of at least one carrier is selected from the group of prebiotics, for example, of enterosorbents, food fibers, polysaccharides of natural origin, indigestible oligosaccharides, fructooligosaccharides, and/or other known prebiotics or substances having prebiotic activity.

The technical result according to the claimed process is also attained by that at least one carrier of an immobilized biocatalyst or at least one of the components, precursors of at least one carrier is selected from the group of carriers known in the biotechnology, for instance, a carbonaceous sorbent, in particular, active carbon, a mineral sorbent, e.g., a zeolite, an inorganic sorbent, e.g., an alumophosphate, a product of biosynthesis and/or of chemical synthesis, e.g., cellulose and its modifications, e.g., microcrystalline cellulose, acetylphthalyl cellulose, a product of vegetable origin, for instance, food fibers, a biopolymer, a product of biochemical or biotechnological origin, e.g., a protein, gel-forming substances, e.g., pectin substances.

In this claim, in the main, only generic names of the employed carriers are cited, a more detailed elaboration of each species would have taken much space, and therefore is not presented here. For example, inorganic sorbents comprise, apart from $AlPO_4$, many other sorbents, e.g., phosphoapatite, magnesium phosphate, applicable compositions of "Almagel" type, aluminosilicates, silica gels, in their physiologically acceptable modifications. To those skilled in the art it is clear, which group, for instance, alginates come into. We do not particularize the sorbents of the indicated kinds either, whether they are produced from naturally occurring materials and/or as a result of chemical technology (e.g., active carbons, zeolites, bentonite, etc.), which particular substance from the substances, compounds denoted by a generic feature is employed. For instance, to pectin substances there belong protopectins and pectocellulose, pectin proper and pectic acids, and other pectin-containing compounds; to polysaccharides there is assigned, e.g., hemicellulose; to biopolymers there are assigned, in particular, lignin, etc. Particular sorbents can be thus distributed into kinds in different ways, for instance, cellulose is both a biopolymer and a polysaccharide, as is well known to those skilled in the art. Therefore we shall not present more detailed explanations here. We do not particularize either, from what kind of stock material this or that sorbent is produced. Thus active carbon from vegetable stock can be wood charcoal or bone charcoal, etc. Any of such variants of producing a sorbent can lead to attaining the technical result. When taking a decision concerning the use of a sorbent in a particular embodiment of the process according to the invention, one can be guided by the properties of a sorbent, which influence the immobilizability of particular BS on it. In particular, use can be made of the sorbent selectivity, associated with the characteristic pore size, or of the reactive properties of the surface groups or of other known properties, imparting to the sorbent or grade or kind thereof selectivity for favorable BS(s). These sorbent characteristics may differ due to technological particulars of producing different grades of one sorbent, e.g., heat treatment conditions in carbon activation allow producing carbons with different characteristics of the pore space and internal surface area. The technical result according to the claimed process can be attained in each of the variants of its embodiment with the use of said sorbents and/or of sorbents with said specific features.

**Disclosure of claims 11 and 16**

The technical result according to the claimed process (variants) is attained also by that the technological process for producing the product comprises no less than one step, including a step of biocatalyzation, i.e., a target step in which, at least partially, there are carried out simultaneously both formation of a "carrier-biocatalyst" system and/or a change of some qualitative characteristics of this system, and a process of changing the food substrate owing, at least partially, to the metabolism of at least part of microorganisms and/or other biological systems of the biocatalyst, while the biocatalyzation step may not coincide or may partially coincide or may fully coincide with one or several other steps of the technological process; one step or several steps or all the steps of the technological process and/or technological operations are carried out till definite value(s) of the characteristic(s) ensuring optimal and/or normative and/or prescribed and/or definable, e.g., rated, characteristics of the process and/or substance and/or biological object and/or product and/or other object is/are attained; the magnitudes of the characteristics can be set by the values and/or by limits thereof and/or by other set of values, or functionally, e.g., with the help of a polynomial, a rational function, an exponential function, a logarithmic function, other known functions, and/or by their qualitative objectively definable characteristics.

Above we have briefly described the understanding of the target step and of the process of biocatalyzation of the food base and/or of the product; we have also disclosed the understanding of how BS of the "carrier-biocatalyst" system can play a part in the transformation of the food base by participating in the metabolic process (or fragments thereof) occurring in the base. A specific feature of many variants of embodying the process according to the invention is such realization of the process in a concrete technological process, wherein the technological process has technological operations and technological steps. The claimed process (variants) can be embodied with various steps being present in the process: for instance, there can be provided preparation of the process equipment, preparation of the food base, preparation of the food base components, preparation of starter cultures, preparation of the biocatalyst carrier, preparation of the biocatalyst components and/or precursors, carrying out immobilization of some BS(s ( before introducing IBC into the food base, combining the base components, starter cultures, BS(s), carriers and/or components, precursors of the biocatalyst carriers, carrying out (possibly several) biotechnological processes, particularly, fermentation, e.g., souring, biocatalyzation process, cooling, bottling and/or any other steps stipulated by the technological regulations. In a particular embodiment of the claimed process there can be present part of or all cited steps and/or other known steps of processes of the food biotechnology. They can be carried out in different periods of time, or sequentially, or partially coincide or fully coincide in time, or be carried out in any technologically conditioned combinations. For obtaining the technical result according to the process, any of the steps or their totality can be carried out till attaining preset value(s) of definite characteristic(s) ensuring optimal and/or normative and/or prescribed and/or rated characteristics of the process, the magnitudes of the characteristics can be set by the values and/or by limits thereof and/or by other, preferably number set, or functionally, e.g., with the help of a polynomial, a rational function, an exponential function, a logarithmic function, other known functions, and/or by their qualitative objectively definable characteristics. A list of such characteristics is very large for lack of space we cannot present it fully. This list comprises all the quantities and characteristics known from physics, including such its branches as mechanics, electricity, acoustics, optics, thermal physics, and others; from chemistry, physical chemistry, biochemistry, microbiology, food biotechnology, engineering and natural science, e.g., time, temperature, pressure, viscosity, resistance, permittivity, velocity of sound in a medium, optical density, concentration, acidity, redox potential, speed of reaction, biochemical activity. For attaining the technical result according to the process, it is of no importance, in which units a particular characteristic is measured. Thus, concentration can be expressed in mole/g or by a titer or in percent by weight, etc.

The technical result is attained also, if some step or steps is or are divided into stages or operations. In particular, the step of preparing a milk base can contemplate a number of operations, such as purification of the stock material, separation of cream, defatting, normalization of milk, magnetic treatment, homogenization, microwave treatment, ultraviolet irradiation, introduction of target additives, e.g., thermostabilizing additives, particularly, citrate salts, thermal treatment, e.g., pasteurization, UHF-treatment, cooling to a definite temperature, deaeration, other known operations. Preparation of microorganism cultures and/or of other introducible biological systems can also contemplate a number of operations or steps, e.g., a step of biochemical activation of bacteria, which as such can also be divided into a number of operations, for instance, re-inoculation of cultures, preparation of inoculum, introduction of growth stimulants, riddance from undesirable metabolites, introduction of additives, particularly, enzymes, BAS, and many other known operations. Preparation of the carrier can be carried out. For instance, the carrier can be preliminarily subjected to heat treatment and/or to other known kinds or treatment, chemical actions, such as hydrolysis, acetylation, mechanical action, such as disintegration and/or dispersion and/or emulsification and/or aggregation, e.g., into granules, and/or be also subjected to any other known kind of preparation. Such subdivision of the steps into stages, operations can apply to any step of the technological process of producing a product in accordance with the claimed process.

The technical result according to the claimed process is attained also in those variants of embodying, when realization of one or several or all the steps and/or of one or several or all the operations and/or of one or several or all stages of the technological process of producing the product is carried out till reaching the value(s) of the characteristics inherent in the step or operation (stage). The values of the characteristics can be, e.g., normative and/or optimal and/or preset and/or definable, particularly, by way of calculations and/or be other known characteristics. The characteristics are selected, predominantly, by proceeding from the requirements of the State System for Controlling Quality of Food Products, and also from particular specifications for making the product. The values of the characteristics are determined, predominantly, by process engineers and, in some cases, by other specialists, e.g., by physiologists, biochemists.

The technical result according to the claimed process cal be attained also, when there may exist a certain degree of freedom in selecting the characteristics even within the scope of one operation. For instance, preparing the process equipment can be carried out till attaining the normative requirements of sanitation service bodies. At the same time, the surface of the equipment can be prepared by treating with live steam at a prescribed temperature for a preset time, or the treatment can be carried out with a solution of a definite antiseptic in a definite concentration. The technical result is also attained, when an operation or step or stage is carried out till attaining simultaneously several of the prescribed values of the indicated characteristics. For example, activation of the biomass of the microorganisms to be introduced can be carried out till attaining a definite time of its residence under the conditions of a definite thermal regime and stirring with prescribed intensity, till attaining prescribed concentration of the biomass in a definite volume, as well as till attaining definite acidity expressed by the pH of the medium and prescribed by the range of values.

The technical result according to the claimed process is attained also in those variants of embodying thereof, when some operation, step or stage is carried out till attaining optimal characteristic value; as a rule, the optimality criterion must be clearly defined. For instance, the amount of the starter to be introduced can optimize the price function of the "starter cost, souring time" or, for instance, optimize expenditures for obtaining a therapeutic dose of live bifidobacteria in 100 ml of the product. The technical result according to the claimed process is attained also in those variants of embodying thereof, when some operation, step or stage is carried out till attaining the normative value of the characteristic, such characteristic, as a rule, being established by some normative documents. The technical result according to the claimed process is attained also in those variants of embodying thereof, when some operation, step or stage is carried out till attaining the prescribed value of the characteristic. The value of the characteristic can be preset in various ways. For instance, it can be preset functionally, it can depend on the functional relationship of the magnitudes and/or values of other characteristics. For instance, washing the biomass with a solution to remove undesirable metabolites can be till attaining the prescribed level of optical density of the washing solution, this level being defined in fractions of the initial optical density. Or, say, the step of milk homogenization (the step of preparing the food base) is carried out with determining the size of water-insoluble components of milk (of fat globules having, predominantly, spherical shape), and this step is completed when the functional ratio $R_{min}/R_{max} \in [a; b]$ is reached, where $R_{min}$ is the radius of globules having a minimum size, $R_{max}$ is the radius of globules having a maximum size, [a, b] is the selected segment of the number axis (the number set), for example, a = 0.001 and b = 0.1.

The technical result according to the claimed process is attained also in those variants of embodying thereof, when some characteristic or characteristics are prescribed by their qualitative features. In particular, these can be structural characteristics of the product, physiological characteristics. For example, souring can be carried out till the clot becomes mature. This qualitative characteristic is clear to a process engineer, but for a person who is not a specialist, a different characteristic is preferable. Since all the food process characteristics can be objectively analyzed and studied by scientific methods, any qualitative characteristic can be expressed with the help of a set of other characteristics which can be determined by measurements, instrumentally. In particular, maturity of a clot corresponds to definite pH, viscosity, number of microbial bodies in 1 ml of product, concentration of definite metabolites, etc. Characteristics of the product which describe its physiologically active properties, other known characteristics, can also be regarded as qualitative characteristics.

**Disclosure of Claims 12 and 17**

The technical result according to the claimed process is attained also in those variants of embodying thereof, wherein at any step of the technological process it is possible to additionally introduce into the food base and/or into its components flavor additives, and/or aromatizers, and/or colorants, and/or biologically active components, and/or mineral substances and/or their salts, and/or vitamins, and/or vitamin precursors, and/or enzymes, and/or vitamin precursors, and/or preservatives, and/or emulsifiers, and/or stabilizers, and/or buffers, and/or structure-forming agents, and/or fillers, and/or emulsifiers, and/or thickeners, and/or antioxidants, and/or vegetable extracts, and/or products of animal origin, and/or marine products, and/or animal proteins, and/or vegetable proteins, and/or extracts from animal or vegetable proteins, and/or amino acids, and/ or carbohydrates, and/or lipids, and/or alcohols, and/or oils, and/or drinking water, and/or mineral water having arbitrary ionic composition, suitable for drinking, and/or organic acids, and/or derivatives thereof, and/or other organic substances, including products of microbial metabolism, and/or products of biosynthesis, and/or products of photosynthesis, and/or a biomass of microorganisms, and/or an extract of a biomass of microorganisms, obtained by any known method, and/or food additives and/or premixes and/or ingredients allowed for use in the food industry, taken each separately or in any combination thereof in an arbitrary ratio, in native state or after pretreatment by any known physicochemical, and/ or chemical, and/or technological treatment methods.

**Disclosure of Claims 13 and 18**

The technical result according to the claimed process is attained also in those variants of embodying thereof, wherein at any step of the technological process the food base and/or its component or components, or the half-finished product, taken in an arbitrary physical or chemical state, can be subjected to chemical treatment, including reactions of addition, and/or splitting, and/or oxidation, and/or reduction, and/or to mechanical treatment, predominantly to mixing or stirring, and/or comminution, and/or separation, and/or vibration treatment, and/or separation, and/or dilution, and/or filtering, and/or degassing, and/or evacuation, and/or saturation with a gas or with a mixture of gases, and/or concentration, predominantly by membrane separation or sorption methods, and also can be subjected to thermal, and/or electromagnetic, and/or electrophysical, and/or bioenergic, and/or acoustic, and/or ultrasonic treatment, and/ or to aggregation and/or keeping under the conditions of the above-indicated effects.

For attaining the technical result according to the claimed process in different variants of its embodiment, it is possible to use different kinds of treatment and to carry out a particular treatment required in a given variant of carrying out the process, with a particular intensity or in conformity with a particularly prescribed regime. For instance, there can be prescribed a stepped regime of heating, or continuous cooling of the base, or other temperature schedule of the heat treatment conditions. Stirring can be carried out with a prescribed intensity, achieving laminar or turbulent motion of the liquid base. The stirring can be preset, say, by rotation speed. In the treatment regimes as such steps can be contemplated, which are carried out till attaining definite values of the characteristic(s), as this is disclosed in the explanations to claim 11. The treatment of the base and/ or of any its component(s) can also be carried out till attaining a definite value of the characteristic.

For attaining the technical result according to the claimed process in different variants of its embodiment, it is possible to use different kinds of equipment, apparatus, instruments, devices, any other known kinds of engineering means.

## Disclosure of Claims 19 and 22

In different forms of embodying the claimed process according to the invention, directed to obtaining biocatalyzed food products, in particular, fermented milk biological products, the technological process is conducted with keeping a definite ratio between the number of microbial bodies in the immobilized biocatalyst and the total number of microbial bodies in the product. The technological process is run so that in the course of obtaining the immobilized biocatalyst in the composition of the finished product the ratio

$$\log (N_{moibc}/N_{moprod}) \in [-9; 0]$$

should be attained, wherein:

$N_{moibc}$ is the number of microbial bodies of the microorganisms in the immobilized biocatalyst;
$N_{moprod}$ is the total number of microbial bodies of the microorganisms in the finished product.

In many particular forms of embodying the process this range can be appreciably smaller. Thus, for some processes of producing biocatalyzed bifidokefir the ratio $\log (N_{moibc}/N_{moprod}) \in [-3; 0]$ can be observed, or this functional relationship can belong to a still narrower number interval, e.g., to [-1; 0]. The right boundary of the range is reached when all the microorganisms in the product are in the immobilized form. The left boundary is the farther away from zero, the greater number of microorganisms in the product is outside the product. The left boundary of the range is reached when the fraction of MO IBC of the total number of MO in the product is $10^{-9}$.

## Disclosure of Claims 20 and 23

In many particular forms of carrying out the claimed process the technical result can be attained by controlling the mass ratio between the IBC and the product. In particular, concrete variants of the process can be carried out so that in the course of the technological process of obtaining the immobilized biocatalyst the ratio

$$\log (M_{ibc}/M_{prod}) \in [-8; 0]$$

should be reached, wherein:

$M_{ibc}$ is the mass of the IBC in the composition of the product;
$M_{prod}$ is the total mass of the product.

Naturally, the right boundary of the range is reached in those variants of carrying out the process, where the entire food product consists of an immobilized biocatalyst. Such variant can be realized, e.g., when the fermented milk microflora found in a relatively small amount of a liquid milk base is immobilized on dehydrated food fibers of wheat bran, when the entire liquid part of the food base is sorbed by the fibers. The left boundary of the range is the smaller, the smaller mass fraction in the product is constituted by the IBC carrier. The extreme value of the region is reached when the mass fraction of the IBC in the product is $10^{-8}$. In many widespread variants of carrying out the process said functional relationship will lie in a narrower range:

$$\log (M_{ibc}/M_{prod}) \in [-3; -1].$$

## Disclosure of Claims 21 and 24

In different forms of carrying out the claimed process according to the invention, directed to producing biocatalyzed varieties of the known fermented milk biological products, the technological process is conducted with observing a definite relationship between the number of the microbial bodies of microorganisms of the starter of the title fermented milk product, e.g., kefir, yogurt or ryazhenka, etc., and the number of the microbial bodies of probiotic microorganisms, e.g., bifidobacteria, propionic acid bacteria, etc. For embodying the process according to the invention, it is of no importance, which particular of the indicated BSs will be in the immobilized form. Variants of carrying out the process are possible, in which both microorganisms of the lactic acid starter and probiotic microorganisms will be immobilized, partially or completely, Variants are possible, when only probiotic BSs will be immobilized. Variants are possible, when, on the contrary, lactic acid microorganisms will be immobilized, for instance, when they are introduced into the product in the composition of the IBC.
We indicate a wide range for the qualitative relation of the kinds of microorganisms in producing the product in accordance with the process, when, with their joint residence in the composition of the food base or product, the relation

$$\log (N_{mos}/N_{pom}) \in [-9; +9]$$

is maintained, wherein:

$N_{mos}$ is the number of microbial bodies of the microorganisms of the lactic acid starter;
$N_{pom}$ is the number of microbial bodies of probiotic microorganisms.

In may variants of carrying out the process this range can be appreciably diminished: for instance, for some processes of producing biocatalyzed bifidokefir the relation log $(N_{mos}/N_{pom}) \in [-2; +5]$ can be observed, or this functional relation can belong to a still narrower number interval, such as $[-1; +3]$.

### Disclosure of Claims 25 and 33

These claims are directed to food products which we can call "biocatalyzed". Actually, these are products resulting from the processes claimed in claims 1—24. In a similarly dualistic manner as with regard to the process, we distinguish two types of the products, we distinguish the pathways by which the IBC appears in the product.

If the IBC was not introduced into the product (into the product base), and it was formed in the product in the course of the technological process (according to the process as claimed in claim 1 and in the claims dependent thereon), such products are claimed in claim 25 and in the claims dependent thereon. But if the IBC was formed before introducing into the food base, and in the course of the technological process there occurs only its qualitative transformation together with the food base (according to the process as claimed in claim 5 and on the claims dependent thereon, such products are claimed in claim 33 and in the claims dependent thereon.

Since the technologies of producing biocatalyzed products have been described hereinabove with adequate completeness, there is no necessity in presenting here separate descriptions of the dependent claims directed to products. They on the whole are analogous to the disclosures of the dependent claims directed to the process.

### Disclosure of Claims 41 and 42

Observing dualism in approach to the classification of processes for producing biocatalyzed products and of the very products, these products are directed to two different starters for producing biocatalyzed products.

Claim 41 is directed to a starter which comprises at least one physiologically acceptable carrier and/or at least one precursor thereof, and at least one biological system. In accordance with the adopted approach, in this claim we require that BS should not be immobilized, and that its immobilization should take place in the food base (product) in the course of the technological process. Here it is essential that the introduced starter elements will remain, possibly, transformed, in the composition of the product. The starter can additionally contain substances and/or ingredients which improve in one sense or another the process of immobilization and/or carrying out separate operations, process steps and/or the course of the technological process on the whole.

Claim 42 is directed to a starter which contains the same elements as the claim according to claim 41, the difference being in that that the BS is immobilized by the carrier. The introduced IBC will remain in the composition of the product. This is the difference of this starter from the prototype (see Patent JP 02057144 a, 1990). The starter can additionally contain substances and/or ingredients which improve in one sense or another the process of transformation of the IBC being introduced or of formation of other IBC(s) in the product, and/or of transformation of the food base and/or carrying out separate operations, process steps and/or the course of the technological process on the whole.

### Information Supporting Feasibility of the Invention

The claimed process for producing biocatalyzed products and also starters for producing thereof can be embodied in a multiplicity of particular forms, therefore we are not able to exhaust various examples here. The Examples presented below merely illustrate the invention, and are not intended to furnish an exhaustive description thereof.

**Example 1.** A process for producing biocatalyzed bifidokefir (variant)

1000 liters of milk are prepared, by cleaning milk from foreign admixtures by filtration, then the milk is normalized in terms of fat till attaining the homographic relation: $(\mathbf{m_{total} + m_{fat}/m_{total} - m_{fat}}) \in [1.0; 1.1]$, wherein

$m_{total}$ is the total mass of the milk;

$m_{fat}$ is the mass of fat in the milk;

further the milk is homogenized till the functional relation is reached: $\mathbf{log\ (R_{min}/R_{max})} \in \mathbf{[-2; -1]}$, wherein

$R_{min}$ is the radius of fat globules having a minimum size;

$R_{max}$ is the radius of globules having a maximum size;

then sodium citrate is introduced in an amount of 0.15 kg, further the mixture is subjected to ultrasonic treatment for 30 sec., then pasteurized at a temperature of $77 \pm 2°C$ with keeping for 12 min., then deaerated under pressure of 0.5 abs. atm. with stirring and deaeration for 10 min. From the total mass of the prepared milk 25 kg of milk are sampled into a starter can, cooled to 38°C, 0.5 kg of the biomass of bifidobacteria (strains of B. bifidum, B. longum, B. adolescentis in the ratio of 1:1:1) is introduced in the form of a liquid concentrate with a biotiter of at least $10^9$ CFU/ml, after that the following components are additionally introduced, till the following amounts thereof are reached in the mixture, in percent by weight:

| | |
|---|---|
| Agar | 0.05 |
| Pancreatic hydrolyzate of milk | 6.2 |
| Corn steep liquor | 0.09 |

(continued)

| | |
|---|---|
| Milk dry residue (MDR) | 10.0 |
| D(-)-lactose | 0.08 |
| Sucrose | 2.0 |
| Ascorbic acid | 0.005 |
| Acetylphthalyl cellulose (APC) | 2.2 |

The mixture is stirred, and souring is carried out till pH 5.0—5.2 is reached, after that 0.6 kg of 50% aqueous aseptic solution of sodium hydrocarbonate is added, water for which has been prepared on a special ion-exchange water-treatment plant. In the present case in the starter can there takes place a target step of formation of a two-component IBC (in terms of the carrier): APC and agar. The introduced additives are reagents influencing the processes of IBC formation. However, in the starter can the target step is not completed. The mixture is thoroughly stirred for 3 min, bringing the speed of the stirrer to 300 rpm, and the mixture is additionally kept at $37\pm1°C$ for 1 hour. At the same time, the main mass of the milk after the pasteurization is additionally subjected to heat treatment at $138\pm2°C$ with keeping for 4 sec and to cooling down to $27\pm1°C$. The bioactivated biomass obtained in the starter can in the mixture has a biotiter of at least $10^{10}$ CFU/ml and contains activated bifidobacteria, part of which is immobilized by APC. Part of bifidobacteria is also immobilized by agar, and this increases their subsequent stability upon combining with kefir fungi, but the proportion of this IBC in the mixture is insignificant. Then the mixture is introduced into the tank with the main mass of the milk and stirred for 3 min., the rotation speed of the paddle mixer being 5 rpm. After a period of 25 min. the resulting food milk base with additional components containing the IBC and growth factors is combined with 25 kg of a kefir starter (drains of kefir fungi) whose characteristics meet the current branch standard. The mixture is stirred for 8 min. and kept at a temperature of $26\pm1°C$ for 6—8 hours till acidity of 62—65°T is reached with periodic stirring (8 times an hour), which provides laminar motion, during 1 min. each. Then the product is cooled down to $7\pm1°C$ and directed to bottling and corking. Growth of the biomass of the microorganisms occurs in a temperature range more favorable for the microorganisms of the kefir starter which comprises a symbiosis of several different species of microorganisms. Therefore they pass through a larger number of generations, and the milk substrate becomes transformed, mainly due to their synthesis, turning into kefir. At the same time, bifidobacteria that feature a certain polymorphism due to the presence of D(-)-lactose in the activating substrate, and, consequently, featuring resistance to unfavorable effects of the medium, in addition being partially immobilized, though lose some of their activity, preserve their competitive stability in the product relative to the dominant population of the kefir microorganisms. This influences the metabolism of the kefir fungi and improves the properties of the product, as in the analog. The process of IBC formation begins already in the starter can, the carrier (APC) undergoing changes due to hydration. As the pH of the medium decreases, hydration proceeds more intensively. In the present Example the target step and the biocatalyzation step partially coincide with the step of souring the milk base in the tank. In the step of souring in the tank with the main part of the milk there also takes place immobilization by APC of lactic acid streptococci, of acetic acid bacteria, of other kinds of the kefir starter microorganisms, and also of some enzymes, which makes the IBC on the APC multicomponent (in terms of the immobilized biological systems), and makes the action of the product in the GIT bioprolonged. In the tank there also occur further hydration and swelling of the APC. The whole introduced amount of the APC and, correspondingly, the whole IBC obtained on it, remain in the product. The selected regime of laminar stirring does not destroy the IBC on the APC, which has formed toward the end of the process in the totality of its properties. At the same time, because of intense stirring in the initial step after introducing into the tank and sufficiently low acidity, the IBC on agar may be not preserved. The content of bifidobacteria in the product is provided to be in the range of $\log N_{mob} \in [8; 11]$, where $N_{mob}$ is the number of cells of bifidobacteria in 100 ml. Practically all the immobilized MOs will be preserved during passage along the GIT, therefore the IBC in the colon will be able to display for a long period of time the colony-forming activity, antagonistic activity to pathogenic and conditionally pathogenic microflora, and also to enrich the microbiocenosis of the intestine with valuable metabolites. The obtained product, while preserving high taste and other organoleptic properties of the analog (bifidokefir), a dense clot along with a low acidity, materially excels the analog in the activity of physiological effect. A small amount of the APC and its microdispersity on full hydration makes its presence in the product unnoticeable to the consumer.

**Example 2.** A process for producing therapeutic biocatalyzed product for early age children (variant)

1000 kg of milk which meets normative requirements are filtered, defatted, homogenized, sterilized at $136\pm1°C$ with keeping for 5 s, and cooled to $25\pm1°C$. Then 20 kg of a kefir starter (drains of kefir fungi) and 2 kg of acidophilic starter are introduced, the mixture is stirred for 8 min. and allowed to stand for 2 hrs. After that liquid concentrated rehydrated biomass of bifidobacteria Bifidobacterium bifidum in an amount of 5 kg is introduced, which, before introducing, was subjected to technological pretreatment and mixed with 3 kg of activated bone charcoal, on which lysozyme in an amount of 300 g was preliminarily immobilized. The immobilization was carried out by vacuum drying of the lysozyme solution in a mixture with charcoal at the temperature of 35°C and pressure of 0.05 mm Hg abs., till residual humidity of 4% reached. The mixture is again stirred for u8 min. and allowed to stand for other 2 hrs. Then 300 g of a bicarbonate buffer are introduced, stirred, and souring is carried out till acidity of 65—70°T is reached. After that 200 g of magnesium hydroxide are introduced, the contents are stirred, cooled down to 6±1°C, and directed to bottling. The target step proceeds from the moment of introducing the IBC on charcoal ("charcoal-lysozyme" system) to the moment of introducing magnesium hydroxide. In the course of the target step other MOs and BSs present in the food base before introducing the IBC thereinto, as well as those metabolites and intermediates which are formed in the base in joint metabolic transformation of the substrate by the microbiocenosis of the product, are immobilized on the charcoal. Therefore the IBC in the course of the target step becomes multicomponent. The introduced food additive in the form of magnesium hydroxide inactivates the immobilized probiotics and additionally preserves them from unfavorable effects during passage along the esophagus and stomach, losing its inactivating action in the intestine. The product thus obtained has high therapeutic and therapeutic-prophylactic properties. Possessing the organoleptic processes of conventional high-quality fermented milk product for children, the obtained product differs from said conventional product in that it contains in immobilized form lysozyme, a valuable bifidogenic enzyme, as well as immobilized colonies of active bifido- and lactobacteria. The product features enhanced adhesion to the wall of the intestine, which it reaches with preserving high biological activity. Besides, the active charcoal has a part of the pore space, which is free for the adsorption of toxic gases of the intestine. A combination of these properties makes the product unique. The product is indicated, in particular, in dysbacteriosis, diarrhea.

**Example 3**. A process for producing a low-calorie dietetic biocatalyzed product (version)

Defatted technologically prepared milk is combined with soluble bifidogenic dietetic fibers, on which bifidobacteria and propionic acid bacteria are preliminarily immobilized in the 3:1 ratio, then sodium hydrocarbonate is added for the inactivation, this sodium hydrocarbonate also acting as a buffer. The product is kept for 1 hr at a temperature of 20±2°C, then cooled down to 6±1°C and directed to bottling. The dietetic fibers provide for a sense of fullness, with the energy value of the product being very low, the product having a high physiological activity due to the bioprolonged action of the IBC in the intestine.

**Example 4.** A process for producing a biocatalyzed product on a milk-and-vegetable base (variant)

A homogenized mass of dry non-sulfitized apricots (10 kg) is subjected to aseptic treatment and introduced into milk serum (40 kg). 360 g of ascorbic acid and citric acid are also introduced into the mixture in the 1:3 ratio. After subjecting the mixture to hydrolysis for 6 hr at a temperature of 55±2°C, the mixture is cooled down to 26±1°C, and defatted pasteurized milk is introduced in the amount of 150 kg, containing a lactic acid starter in the amount of 6 kg and fructose in the amount of 5 kg. The mixture is enriched also with serum protein concentrate (5 kg), thoroughly stirred for 10 min with the paddle stirrer rotating with the speed of 60 rpm, and kept for 5 hrs at the starting temperature. Then a stabilizer is added to the mixture, the contents are stirred with the speed of 20 rpm, cooled down to 5°C, and directed to bottling. The target step begins after the introducing of the lactic acid starter. Before that, in the course of hydrolysis of the vegetable stock (precursor of the carrier), the process of formation of the carrier was taking place due to the hydration and hydrolysis of protopectin, to the transition of insoluble protopectin into soluble protopectin. Transformation of the pecto-cellulose matrix of cells, catalyzed by hydrogen ions, leads to the hydrolysis of acetyl and methyl bonds. Insoluble pectin is released into the medium, and this leads to the formation of two carriers (or of a two-component carrier): a porous-fibrous matrix of the vegetable stock carrier and gel-like pectin. Hydrolysis increases also the number of reactive carboxyl groups, this increasing the sorptive capacity of the fibers. Part of the serum BS and the serum proteins are immobilized by both carriers. After the introduction of the starter MOs and milk, biocatalyzation takes place, i.e., there continues the process of formation of the two-component IBC (in terms of the carrier) with simultaneous participation of the IBC BS in the process of transformation of the base — in the present case, of both the vegetable and milk components. Introduction of the target components in the form of organic acids influences the rate of hydrolysis and, correspondingly, on the rate of the IBC formation process. The process of biocatalyzation is ceased by introducing the stabilizer and cooling down, the selected regime of stirring does not destroy the formed IBC. The product thus obtained has high structural and taste characteristics, a tender clot with pleasant fruit aftertaste, active physiological properties conditioned by the synergism of the properties of pectin substances, lactic acid bacteria, serum components, food fibers, introduced biologically active substances, valuable metabolites, and also by the effect of their bioprolonged action.

**Example 5.** A process for producing a biocatalyzing milk drink (biocatalyzing bifidomilk) (variant)

1 kg of finely dispersed carboxymethyl cellulose with 5% residual humidity is prepared, then a mixture of lysozyme, superoxide dismutase, taken in a 0.3% aqueous solution in the 39:1 ratio, having a mass of 4 kg, is immobilized on said cellulose by the method of vacuum drying at a temperature of 38±1°C till residual humidity of 6% is reached. Into cleaned, fat-normalized, homogenized and thermally treated milk (20 kg) there are introduced a prepared IBC on carboxymethyl cellulose, and also in 1.5 kg of an aqueous solution 300 g of serum concentrate, 200 g of fructose, 1 g of sodium succinate, 2 g of calcium chloride, 0.5 g of taurine, as well as 400 g of liquid concentrate of bifidobacteria with a biotiter of at least $1.0 \times 10^{10}$ CFU/ml. Then the mixture is stirred for 6 min. with the speed of 600 rpm, cooled down to the temperature of 18°C, and kept for 1 hr. During this period of time the IBC undergoes changes associated with the process and hydration and swelling of the carboxymethyl cellulose and also with a certain sorption of the BSs from solution. At a sufficiently low temperature, the BSs have no time for transforming the substrate to any considerable extent, except for releasing some valuable metabolites into the solution. Adaptation of MOs in the medium also takes place. The mixture is cooled down to 6±1°C and directed to bottling. The biocatalyzing properties of the bifidomilk manifest themselves in the intestine, where the biological systems present in the product come to intact. The product has a pleasant taste.

According to the claimed process it is also possible to produce drinks, puree, dry mixes for ice-cream, souffle, creams, confectionery, fermented dairy products, milk products, including milk, cheeses, processed cheeses, and other food products, both absolutely novel and producible heretofore, but in their biocatalyzed modifications.

**Example 6.** Biocatalyzed ice-cream (variant)

Ice-cream, besides conventional components, additionally contains as a filler 2 wt.% of a fruit powder on which preliminarily, i.e., before combining with the main mass of the ice-cream, bifidobacteria have been immobilized. It is known to use a fruit powder as the filler, but immobilization of a probiotic thereon imparts higher dietetic properties to the product. At ice-cream storage temperatures the bifidobacteria are inactivated and do not reduce the ice-cream shelf life. At the same time, due to the preliminary immobilization, the bifidobacteria remain viable, their biologically active properties will manifest themselves only after the product has been consumed, in the human organism.

**Example 7. A starter for producing biocatalyzed bifidokefir (variant)**

A direct-inoculation starter for producing bifidokefir in its biocatalyzed modification comprises a lyophilized biomass of bifidobacteria, immobilized by microcrystalline cellulose, the concentration of live bifidobacteria being at least $10^{11}$ CFU/cm$^3$. Lactulose, introduced in the amount of 2 wt.% into the solution before the lyophilic drying, is additionally immobilized on MCC.

**Claims**

1. A process for producing a food product comprising the use of a food base, of at least one physiologically acceptable carrier and of at least one biological system, according to which process:

   - the food base is combined with at least one physiologically acceptable carrier and/or with at least one precursor thereof;
   - the food base is combined with at least one biological system;
   - at least one immobilized biocatalyst (IBC) is formed, which comprises a complex "carrier-biological system";
   - the participation of at least one immobilized biocatalyst is provided in obtaining the finished product due to metabolic processes and/or processing of the food base;
   - the presence of at least one immobilized biocatalyst in the composition of the finished product is provided.

2. A process according to claim 1, wherein as the biological system use is made of at least one element or of a mixture of elements selected from the group comprising: microorganisms, amino acids, amino acid derivatives, peptides, polypeptides, enzymes, enzyme derivatives, a coenzyme, coenzyme structural components, coenzyme derivatives, vitamins, vitamin derivatives, a vitamin precursor, proteins.

3. A process according to any of claims 1—2, wherein for forming the "carrier-biocatalyst" system and/or changing any qualitative characteristics of this system in the course of the technological process of producing the finished product, corresponding conditions are provided in the food base and/or in at least one of its components, that is, a complex of physical and/or physicochemical and/or chemical and/or biochemical parameters and/or characteristics of the technological process is purposefully formed, and/or a purposeful influence is exerted by changing the above-cited characteristics of the process and/or by introducing reagents, e.g., target additives improving the binding of the biological system with the carrier, improving the sorption properties of the carrier, or improving its adhesive properties, or improving other known technological or physiological properties, and/or in other known manner, the result of which is at least a change of at least one qualitative characteristic of the "carrier-biocatalyst" system.

4. A process according to any of claims 1—3, wherein for forming the "carrier-biocatalyst" system and/or changing any qualitative characteristics of this system in the course of the technological process of producing the finished product a target step of biocatalyzation is provided in which, at least partially, production of an immobilized biocatalyst in its final qualitative form and transformation of the food base are carried out.

5. A process for producing a food product comprising the use of a food base, of at least one carrier and of at least one biological system, according to which process:

   - at least one carrier and at least one biological system in the form of at least one immobilized biocatalyst comprising a complex "carrier-biological system" are introduced into a food base,
   - whereafter the introduced immobilized biocatalyst is transformed to change at least one its qualitative characteristic,
   - participation of at least one immobilized biocatalyst in obtaining the finished product is provided due to metabolic processes and/or processing of the food base,
   - the presence of at least one immobilized biocatalyst in the composition of the finished product is provided.

6. A process according to claim 5, wherein as the biological system use is made of at least one element or of a mixture of elements selected from the group comprising: microorganisms, amino acids, amino acid derivatives, peptides, polypeptides, enzymes, enzyme derivatives, a coenzyme, coenzyme structural components, coenzyme derivatives, vitamins, vitamin derivatives, a vitamin precursor, proteins.

7. A process according to any of claims 5—6, wherein for changing at least one qualitative characteristic of the IBC in the course of the technological process of producing the finished product, corresponding conditions are provided in the food base and/or at least in one of its components, in particular, a complex of physical and/or of physicochemical, and/or of chemical and/or of biochemical parameters and/or characteristics of the technological process is purposefully formed, and/or a purposeful influence is exerted by changing the above-cited characteristics of the process and/or by introducing reagents, e.g., target additives improving the binding of the biological system with the carrier, improving the sorption properties of the carrier, or improving its adhesive properties, or improving other known technological or physiological properties, and/or in other known manner, the result of which is at least a change of at least one qualitative characteristic of the "carrier-biocatalyst" system.

8. A process according to claims 5—7, **characterized in that**, for changing at least one qualitative characteristic of the IBC in the technological process of producing the finished product, a target step of biocatalyzation is provided, in which, at least partially, a change in at least one of the IBC characteristics and a transformation of the food base are achieved.

9. A process according to any of claims 5—7, wherein as at least one biological system combined with the food base use is made of at least one element or of a mixture of elements selected from the group comprising:

   - microorganisms used as starters or in the formulation of starters of the known fermented milk products such as kefir, yogurt, ryazhenka, acidophilin, kumiss, airan, clabber, sour cream, curds, and other known products;
   - microorganisms from the group of probiotics and/or other biological systems having probiotic activity, e.g., bifidobacteria, propionic acid bacteria, Bacillus subtilis, lactobacteria, acetic acid bacteria.

10. A process according to any of claims 1-4, 9, wherein as at least one immobilized biocatalyst carrier and/or precursor of at least one carrier use is made of at least one element or of a mixture of elements selected from the group comprising:

    - prebiotics, classically used in food and medical technologies, for example, enterosorbents, food fibers, polysaccharides of natural origin, indigestible oligosaccharides, fructooligosaccharides, and/or other known prebiotics or substances having prebiotic activity;
    - materials employed in the biotechnology of carriers, for example, a carbonaceous sorbent, in particular, active carbon, a mineral sorbent, for example, a zeolite, an inorganic sorbent, for example, aluminophosphate, a product of biosynthesis or of chemical synthesis, for example, cellulose and its modifications, a product of vegetable origin, for example, food fibers, a product of biological origin, for example, a microorganism, a biopolymer, a product of biochemical or biotechnological origin, for example, a protein, gel-forming substances, for example, pectin substances.

11. A process according to any of claims 1—4, 9, 10, wherein the technological process of producing the product comprises at least one step, including the step of biocatalyzation, wherein the step of biocatalyzation may coincide fully and/or coincide partially and/or not coincide at all with another and/or with several other steps of the technological process, wherein one or several or all the steps of the technological process and/or technological operations are carried out till definite value(s) of the characteristic(s) ensuring optimal and/or normative and/or prescribed and/or definable, e.g., rated, characteristics of the process and/or substance and/or biological object and/or product and/or other object is/are attained; the magnitudes of the characteristics can be set by the values and/or by limits thereof and/or by other set of values, or functionally, e.g., with the help of a polynomial, a rational function, an exponential function, a logarithmic function, other known functions, and/or by their qualitative objectively definable characteristics.

12. A process according to any of claims 1—4, 9—11, wherein into the food base and/or into its components in any step of the technological process there is additionally introduced at least one element or a mixture of elements selected from the group comprising:

- flavors, aromatizers, colorants, mineral substances and/or their salts, food additives, premixes and/or other food compositions, ingredients;
- biologically active components, vitamins and/or vitamin derivatives and/or vitamin precursors, enzymes and/or enzyme derivatives, antioxidants;
- preservatives, emulsifiers, stabilizers, fillers, buffers, structure-forming agents, thickeners;
- vegetable extracts, products of animal origin, marine products, extracts from products of animal origin or from marine products, animal proteins, vegetable proteins, extracts from animal or vegetable proteins, amino acids, carbohydrates, lipids, alcohols, oils;
- organic acids, and/or derivatives thereof, other organic substances, including products of microbial metabolism, products of biosynthesis, products of photosynthesis, a biomass of microorganisms, an extract of a biomass of microorganisms, obtained by any known method.

13. A process according to any of claims 1—4, 9—12, wherein in any step of the technological process the food base and/or its component or components or the half-finished product, taken in an arbitrary physical or chemical state, are subjected to at least one kind of treatment or to a combination thereof, wherein the kinds of treatment are selected from the group consisting of:

- chemical treatment, including reactions of addition, splitting, oxidation, reduction;
- mechanical treatment, particularly mixing, stirring, comminution, separation, vibration treatment;
- separation, dilution, filtering, degassing, evacuation, saturation with a gas or with a mixture of gases, concentration, predominantly by membrane separation or sorption methods;
- thermal, electromagnetic, electrophysical, bioenergic, acoustic, ultrasonic treatment;
- aggregation;
- keeping under the conditions of at least one of the above-indicated effects.

14. A process according to any of claims 5—8, wherein as at least one biological system to be combined with the food base use is made of at least one element or of a mixture of elements selected from the group comprising:

- microorganisms from the composition of the technical microflora of food, particularly of dairy production, for instance, employed as starters or in the formulation of starters of the known fermented milk products such as kefir, yogurt, ryazhenka, acidophilin, kumiss, airan, clabber, sour cream, curds;
- microorganisms from the group of probiotics and/or other biological systems having probiotic activity, for example, bifidobacteria, propionic acid bacteria, Bacillus subtilis, lactobacteria, acetic acid bacteria.

15. A process according to any of claims 5—8, 14, wherein as at least one immobilized biocatalyst carrier and/or a precursor of at least one carrier use is made of at least one element and/or of a mixture of elements selected from the group comprising:

- prebiotics classically used in food and medical technologies, for example, enterosorbents, food fibers, polysaccharides of natural origin, indigestible oligosaccharides, fructooligosaccharides, and/or other known prebiotics or substances having prebiotic activity;
- materials employed in the biotechnology of carriers, for example, a carbonaceous sorbent, in particular, active carbon, a mineral sorbent, for example, a zeolite, an inorganic sorbent, for example, aluminophosphate, a product of biosynthesis or of chemical synthesis, for example, cellulose and its modifications, a product of vegetable origin, for example, food fibers, a product of biological origin, for example, a microorganism, a biopolymer, a product of biochemical or biotechnological origin, for example, a protein, gel-forming substances, for example, pectin substances.

16. A process according to any of claims 5—8, 14, 15, wherein the technological process of preparing the product comprises at least one step, including the step of biocatalyzation, wherein the step of biocatalyzation may coincide fully and/or coincide partially and/or not coincide at all with another and/or with several other steps of the technological process, wherein one or several or all the steps of the technological process and/or technological operations are carried out till definite value(s) of the characteristic(s) ensuring optimal and/or normative and/or prescribed and/or definable, e.g., rated, characteristics of the process and/or substance and/or biological object and/or product and/or other object is/are attained; the magnitudes of the characteristics can be set by the values and/or by limits thereof and/or by other set of values, or functionally, e.g., with the help of a polynomial, a rational function, an exponential function, a logarithmic function, other known functions, and/or by their qualitative objectively definable characteristics.

17. A process according to any of claims 5—8, 14-16, wherein into the food base and/or into its components in any step of the technological process there is additionally introduced at least one element or a mixture of elements selected from the group comprising:

- flavors, aromatizers, colorants, mineral substances and/or their salts, food additives, premixes and/or other food compositions, ingredients;
- biologically active components, vitamins and/or vitamin derivatives and/or vitamin precursors, enzymes and/or enzyme derivatives, antioxidants;
- preservatives, emulsifiers, stabilizers, fillers, buffers, structure-forming agents, thickeners;
- vegetable extracts, products of animal origin, marine products, extracts from products of animal origin or from marine products, animal proteins, vegetable proteins, extracts from animal or vegetable proteins, amino acids, carbohydrates, lipids, alcohols, oils;
- organic acids, and/or derivatives thereof, other organic substances, including products of microbial metabolism, products of biosynthesis, products of photosynthesis, a biomass of microorganisms, an extract of a biomass of microorganisms, obtained by any known method.

18. A process according to any of claims 5—8, 14-17, wherein in any step of the technological process the food base and/or its component or components or the half-finished product, taken in an arbitrary physical or chemical state, are subjected to at least one kind of treatment or to a combination thereof, wherein the kinds of treatment are selected from the group consisting of:

- chemical treatment, including reactions of addition, splitting, oxidation, reduction;
- mechanical treatment, particularly mixing, stirring, comminution, separation, vibration treatment;
- separation, dilution, filtering, degassing, evacuation, saturation with a gas or with a mixture of gases, concentration, predominantly by membrane separation or sorption methods;
- thermal, electromagnetic, electrophysical, bioenergic, acoustic, ultrasonic treatment;
- aggregation;
- keeping under the conditions of at least one of the above-indicated effects.

19. A process for producing a product according to any of claims 1—4, 9—13, wherein as at least one BS for immobilization on the carrier use is made of a microorganism and in that in the course of forming the immobilized biocatalyst in the composition of the finished product the ratio

$$\log (N_{moibc}/N_{moprod}) \in [-9; 0]$$

is attained, wherein:

$N_{moibc}$ is the number of microbial bodies of the microorganisms in the immobilized biocatalyst;
$N_{moprod}$ is the total number of microbial bodies of the microorganisms in the finished product.

20. A process for producing a product according to any of claims 1—4, 9—13, 19, wherein in the course of forming the IBC in the composition of the finished product the ratio

$$\log (M_{ibc}/M_{prod}) \in [-8; 0]$$

should be reached, wherein:

$M_{ibc}$ is the mass of the IBC in the composition of the product;
$M_{prod}$ is the total mass of the product.

21. A process for producing a fermented milk product according to any of claims 9—13, 19, 20, wherein in combining the food base with the microorganisms of lactic acid cultures, for example, of kefir fungi, Lactobacillus bulgaricus, and in combining the food base with probiotic microorganisms, for example, with bifidobacteria, propionic acid bacteria, and then in all the subsequent steps of the technological process the relation

$$\log (N_{mos}/N_{pom}) \in [-9; +9]$$

is maintained, wherein:

$N_{mos}$ is the number of microbial bodies of the microorganisms of the lactic acid starter;
$N_{pom}$ is the number of microbial bodies of probiotic microorganisms.

22. A process for producing a product according to any of claims 5—8, 14—18, wherein as at least one BS immobilized on the carrier a microorganism is used and in that in the course of changing at least one qualitative characteristic of the immobilized biocatalyst in the composition of the finished product the ratio

$$\log (N_{moibc}/N_{moprod}) \mathrel{E} [-9; 0]$$

is attained, wherein:

$N_{moibc}$ is the number of microbial bodies of the microorganisms in the immobilized biocatalyst;
$N_{moprod}$ is the total number of microbial bodies of the microorganisms in the finished product.

23. A process for producing a product according to any of claims 5—8, 14—18, 22, wherein in the course of changing at least one qualitative characteristic of the IBC in the composition of the finished product the ratio

$$\log (M_{ibc}/M_{prod}) \in [-8; 0]$$

is reached, wherein:

$M_{ibc}$ is the mass of the IBC in the composition of the product;
$M_{prod}$ is the total mass of the product.

24. A process for producing a fermented milk product according to any of claims 14—18, 2, 23, wherein in combining the food base with the microorganisms of lactic acid cultures, example, of kefir fungi, and in combining the food base with the probiotic microorganisms, for example, with bifidobacteria, propionic acid bacteria, and then in all the subsequent steps of the technological process the relation

$$\log (N_{mos}/N_{pom}) \in [-9; +9]$$

is maintained, wherein:

$N_{mos}$ is the number of microbial bodies of the microorganisms of the lactic acid starter;
$N_{pom}$ is the number of microbial bodies of probiotic microorganisms.

25. A food product comprising a food base and at least one immobilized biocatalyst which comprises a complex "carrier-biological system", wherein the immobilized biocatalyst is formed after combining the carrier or carrier precursor with the food base, and the food base is, at least partially, transformed due to metabolism of at least one biological system entering into the composition of the immobilized biocatalyst.

26. A food product according to claim 25, wherein as the biological system use is made of at least one element or of a mixture of elements selected from the group comprising: microorganisms, amino acids, amino acid derivatives, peptides, polypeptides, enzymes, enzyme derivatives, a coenzyme, structural components of the coenzyme, coenzyme derivatives, vitamins, vitamin derivatives a vitamin precursor, proteins.

27. A product according to claims 25, 26, in which the ratio of the mass of the immobilized catalyst formed in the composition of the product and the total mass of the product is

$$\log (M_{ibc}/M_{prod}) \in [-8; 0],$$

wherein:

$M_{ibc}$ is the mass of the IBC in the composition of the product;
$M_{prod}$ is the total mass of the product.

28. A product according to claims 25—27, in which as at least one IBC biological system use is made of a microorganism and the ratio of the number of live cells of the microorganisms immobilized on the IBC carrier and of the total number of live cells of the microorganisms in the product is

$$\log (N_{moibc}/N_{moprod}) \in [-9; 0],$$

wherein:

$N_{moibc}$ is the number of microbial bodies of the microorganisms in the immobilized biocatalyst;
$N_{moprod}$ is the total number of microbial bodies of the microorganisms in the finished product.

29. A product according to claims 25—28, in which the food base comprises milk or a product of processing thereof.

30. A product according to claims 25—29, in which at least one biological system comprises a microorganism selected from representatives of technical microflora of food, particularly dairy production, for instance, of a microorganism classically employed as a starter or in the formulation of starters of the known fermented milk products such as kefir, yogurt, ryazhenka, acidophilin, kumiss, airan clabber, sour cream, curds, and other known products.

31. A product according to claims 25—29, in which at least one biological system comprises a microorganism selected from the group of microorganisms having probiotic activity, such as bifidobacteria, propionic acid bacteria, acetic acid bacteria and/or other known probiotics.

32. A product according to claims 30—31, in which the ratio of the number of microbial bodies of the microorganisms of lactic acid cultures and the number of probiotic microorganisms is

$$\log (N_{mos}/N_{pom}) \in [-9; +9],$$

wherein:

$N_{mos}$ is the number of microbial bodies of the microorganisms of the lactic acid starter;
$N_{pom}$ is the number of microbial bodies of probiotic microorganisms.

33. A food product which comprises a food base and at least one immobilized biocatalyst which comprises a complex "carrier-biological system", said product being wherein the immobilized biocatalyst is transformed after introducing into the food base with a change of at least one its qualitative characteristic, and in that the food base is at least partially transformed due to the metabolism of at least one biological system entering into the composition of the immobilized biocatalyst.

34. A food product according to claim 33, wherein as the biological system use is made of at least element or of a mixture of elements selected from the group comprising: microorganisms, amino acids, amino acid derivatives, peptides, polypeptides, enzymes, enzyme derivatives, a coenzyme, structural components of the coenzyme, vitamins, vitamin derivatives, a vitamin precursor, proteins.

35. A product according to claims 33, 34, in which the ratio of the mass of the immobilized catalyst in the composition of the product and the total mass of the product is

$$\log (M_{ibc}/M_{prod}) \in [-8; 0],$$

wherein:

$M_{ibc}$ is the mass of the IBC in the composition of the product;
$M_{prod}$ is the total mass of the product.

36. A product according to claims 33, 34, in which as at least one biological system of the IBC use is made of a microorganism and the ratio of the number of the number of live cells of the microorganisms immobilized on the IBC carrier and of the total number of live cells of the microorganisms in the product is

$$\log (N_{moibc}/N_{moprod}) \in [-9; 0],$$

wherein:

$N_{moibc}$ is the number of microbial bodies of the microorganisms in the immobilized biocatalyst;
$N_{moprod}$ is the total number of microbial bodies of the microorganisms in the finished product.

37. A product according to claims 33—36, in which the food base comprises milk or a product of processing thereof.

38. A product according to claims 33—37, in which at least one biological system comprises a microorganism selected from representatives of technical microflora of food, particularly dairy production, for instance, of a microorganism classically employed as a starter or in the formulation of starters of the known fermented milk products such as kefir, yogurt, ryazhenka, acidophilin, kumiss, airan clabber, sour cream, curds, and other known products.

39. A product according to claims 33—37, in which at least one biological system comprises a microorganism selected from the group of microorganisms having probiotic activity, such as bifidobacteria, propionic acid bacteria, acetic acid bacteria and/or other known probiotics.

40. A product according to claims 33—37, in which the ratio of the number of microbial bodies of the microorganisms of lactic acid cultures and the number of the probiotic microorganisms is

$$\log (N_{mos}/N_{pom}) \in [-9; +9],$$

wherein:

$N_{mos}$ is the number of microbial bodies of the microorganisms of the lactic acid starter;
$N_{pom}$ is the number of microbial bodies of probiotic microorganisms.

41. A starter for producing a food product, comprising at least one physiologically acceptable carrier and/or at least one carrier precursor and at least one biological system, wherein after the introducing into the food base at least one biological system becomes immobilized by at least one carrier, and the resulting IBC remains in the composition of the food product.

42. A starter for producing a food product, comprising at least one physiologically acceptable carrier and/or at least one biological system, wherein at least one biological system is immobilized by at least one carrier, and the resulting IBC is introduced into the food base and is preserved in the composition of the food product.